# EUROPÄISCHE PATENTSCHRIFT

(11) **EP 1 223 017 B1**
(45) Veröffentlichungstag und Bekanntmachung des Hinweises auf die Patenterteilung: **15.03.2006**
(21) Anmeldenummer: 02000493.3
(22) Anmeldetag: 09.01.2002
(51) Int. Cl.: B29C 45/27, H05B 3/42, H05B 3/48

(54) **Heisskanaldüse**
Hot runner nozzle
Buse à canal chaud

(30) Priorität: 16.01.2001 DE 20100840 U
(43) Veröffentlichungstag der Anmeldung: 17.07.2002
(73) Patentinhaber: Günther GmbH & Co., Metallverarbeitung, 35066 Frankenberg/Eder (DE)
(72) Erfinder: Günther, Herbert, 35108 Allendorf/Eder (DE)
(74) Vertreter: Olbricht, Karl Heinrich

(56) Entgegenhaltungen:
- EP-B- 0 724 943
- DE-A- 3 335 277
- DE-U- 29 507 848
- DE-U- 29 610 268
- GB-A- 2 047 510

## Beschreibung

Die Erfindung betrifft eine Heißkanaldüse gemäß dem Oberbegriff von Anspruch 1.

Heißkanaldüsen sind allgemein bekannt Sie werden in Spritzgießwerkzeugen eingesetzt, um eine fließfähige Kunststoffmasse bei einer vorgebbaren Temperatur unter hohem Druck einem trennbaren Werkzeugblock (Formnest) zuzuführen. Damit sich die zumeist heiße Masse innerhalb der Düse nicht vorzeitig abkühlt, ist gewöhnlich eine elektrische Heizung vorgesehen, welche ein Materialrohr bzw. einen darin ausgebildeten Strömungskanal konzentrisch umgibt und den flüssigen Kunststoff möglichst bis in die Düsenspitze hinein auf einer konstanten Temperatur halten soll. Eine thermische Trennung zwischen heißem Verteiler und kälterem Werkzeug sorgt dafür, daß die Düse - insbesondere im Bereich der Düsenspitze - nicht einfriert und gleichzeitig das Werkzeug (Formnest) nicht erwärmt wird. Zur Überwachung der Temperatur verwendet man gewöhnlich einen Temperaturfühler.

Materialrohr und Heizung sind meist als separate Bauelemente ausgeführt, wobei die Heizung gemeinsam mit dem Thermofühler in einer Ummantelung integriert sein kann, die umfangsseitig auf den Düsenkörper aufsteckbar ist. Bei der Ummantelung handelt es sich, wie z.B. in DE-U1-295 07 848 offenbart, um ein starres Gebilde, das einen elektrisch aktivierbaren Heizleiter in Wendelform aufnimmt und mittels Halte- bzw. Spannelementen auf dem Außenumfang des Düsenkörpers in axialer Richtung festlegbar ist. Oder man verwendet flexible Heizstreifen bzw. -matten, die auf dem'Düsenkörper fixiert werden (siehe beispielsweise EP-B1-0 028 153 oder WO 97/03540).

EP-B1-0 724 943 beschreibt eine Heißkanaldüse mit einer konzentrisch auf ein Materialrohr aufsteckbaren, als vormontierte Heizeinheit mit einem Vergußkörper ausgebildeten Heizung. Letztere besitzt eine durch ein Lochblech zentrierte Heizwicklung, die zusammen mit dem aus Messing bestehenden Vergußmaterial einen soliden Block bildet, bis dieser zur Aufnahme des Materialrohrs konzentrisch ausgebohrt wird. Der Fertigungsaufwand derartiger Heizvorrichtungen ist relativ hoch, was insbesondere dann problematisch sein kann, wenn eine Heizung aufgrund eines Defekts ausgewechselt werden muß. Hinzu kommt, daß stets die gesamte Heizvorrichtung ausgetauscht werden muß, weil die zumeist beschädigte Heizwicklung eingegossen ist Die Anschaffungs- bzw. Ersatzteilkosten sind entsprechend hoch.

Ein weiterer Nachteil herkömmlicher Heizvorrichtungen besteht darin, daß die das Materialrohr konzentrisch umschließende Heizung relativ viel Platz einnimmt, so daß sich die Düsen nicht beliebig dicht nebeneinander anordnen lassen. In zahlreichen Anwendungsbereichen ist es aber erforderlich, möglichst kleine Nestabstände zu realisieren, um separate Kavitäten gleichzeitig oder kompliziertere Bauteile in geringen Abständen mehrfach anspritzen zu können.

Um dem zu begegnen, schlägt DE-U1-296 10 268 vor, den Düsenkanat und die Heizung in einem gemeinsamen Gehäuse seitlich nebeneinander anzuordnen. Das insgesamt flache, T-förmige Gehäuse besteht aus einem Sockelstück und einem Schaftstück, das an seinem freien Ende in einer Düsenspitze endet Parallel zu dem geradlinigen Düsenkanal ist in dem Gehäuse eine Aufnahmebohrung für die Heizung vorgesehen, welche als stabförmiger Heizkörper bis in die nähe der Düsenspitze reicht. Problematisch hierbei ist jedoch, daß das gesamte Gehäuse aus einem einheitlichen Material - zumeist einem Werkzeugstahl - besteht, was sich ungünstig auf die Wärmeverteilung auswirkt. Dies hat zur Folge, daß die Heizkörper oft störanfällig sind, weil die Leistung aufgrund der schlechten Wärmeleitung nur begrenzt auf das Gehäuse übergeht. Häufige Ausfälle der Heißkanaldüse sind die Folge.

Ziel der Erfindung ist es, diese und weitere Nachteile des Standes der Technik zu überwinden und eine Heißkanaldüse zu schaffen, die eine gleichmäßige Wärmeübergangs- und Temperaturverteilungs-Charakteristik aufweist und beim Einbau in eine Form einen nur geringen Platzbedarf erfordert. Auf möglichst rationelle Weise soll ein wirtschaftlich herstell- und montierbarer Aufbau verwirklicht werden, der einen dauerhaft zuverlässigen Betrieb gewährleistet. Angestrebt wird femer eine Düsen-Anordnung mit Heißkanaldüsen in dicht gepackter Anordnung, welche kostengünstig herstellbar und rasch zu montieren sind. Auf zuverlässigen Betrieb ist auch hier großer Wert zu legen.

Hauptmerkmale der Erfindung sind im kennzeichnenden Teil von Anspruch 1 und 24 angegeben. Ausgestaltungen sind Gegenstand der Ansprüche 2 bis 23 und 25.

Bei einer Heißkanaldüse für ein Spritzgießwerkzeug mit einem an einem Werkzeug oder Verteiler montierbaren Materialrohr, in dem wenigstens ein Strömungskanal für eine Materialschmelze ausgebildet ist und das am unteren Ende eine Düsenspitze aufweist, und mit einer Heizung für die Materialschmelze, die wenigstens ein parallel zu dem Materialrohr angeordnetes lineares Heizelement aufweist, sieht die Erfindung vor, daß die Heizung als Massivblock aus einem hochwärmeleitfähigen Material ausgebildet und umfangsseitig auf das aus einem hochfesten Werkstoff bestehende Materialrohr aufsetzbar ist, wobei der Massivblock einen ersten Aufnahmekanal für das Materialrohr und wenigstens einen weiteren, im wesentlichen parallel zu dem ersten Aufnahmekanal verlaufenden, weiteren Aufnahmekanal für das lineare Heizelement aufweist. Dieser äußerst einfache und kostengünstig zu realisierende Aufbau der Heizung sorgt innerhalb des Materialrohrs für eine überraschend gleichmäßige und homogene Temperaturverteilung bis in die Düsenspitze hinein. Die eingestellte Temperatur ist über die gesamte Düsenlänge konstant, was zu entsprechend guten Arbeitsergebnissen führt.

Dazu trägt auch bei, wenn neben dem ersten Aufnahmekanal ein- oder beidseitig wenigstens zwei weitere Aufnahmekanäle zur Aufnahme von Heizelementen vorgesehen sind. Die erforderliche Heizleistung kann dadurch problemlos auf mehrere Heizelemente verteilt werden, welche insgesamt kleiner dimensioniert sein können. Dies wirkt sich günstig auf die Lebensdauer der Heizung aus. Die Heißkanaldüsen arbeiten stets dauerhaft zuverlässig.

Die parallele Anordnung der Aufnahmekanäle innerhalb des Wärmeleitblocks sorgen zudem in einer Richtung quer zur Axialrichtung für einen nur geringen Platzbedarf, so daß sich mehrere Heißkanaldüsen dicht an dicht nebeneinander anordnen lassen. Aufgrund der geringen Düsenabstände können mit einer solchen Düsenreihe problemlos mehrere Formnester oder mehrere Angußpunkte gleichzeitig angespritzt werden, wobei man die Nestabstände bzw. die Abstände der Angußpunkte zumindest in einer Richtung quer zur Axialrichtung extrem klein wählen kann.

Innerhalb des Massivblocks können die Aufnahmekanäle fluchtend in einer Ebene oder radial und/oder in Bezug auf eine Längsrichtung der Düse versetzt zueinander liegen, um beispielsweise ausreichend Platz für die Aufnahme eines Temperaturfühlers zu schaffen. Die Düsenabstände werden dadurch nicht vergrößert.

Ein weiterer wesentlicher Vorteil der erfindungsgemäßen Heißkanaldüse besteht darin, daß das Materialrohr und der Heizkörper entsprechend den jeweiligen Betriebsbedingungen separat voneinander und aus unterschiedlichen Werkstoffen gefertigt werden können, was sich günstig auf die Herstellkosten auswirkt. Die Heizelemente lassen sich separat in den gut wärmeleitenden Heizkörper einsetzen und bei Bedarf auch auswechseln, ohne daß es besonderer Demontagearbeiten bedarf. Die Heizung bildet vielmehr einen separaten Flachheizkörper mit rasch auswechselbaren Heizelementen. Sie ist mit nur wenigen Fertigungsschritten herstellbar und kraft- und/oder formschlüssig auf das druckfeste Materialrohr aufsteckbar.

Um die Durchmesser der Heizelemente und der Materialrohre variieren zu können, ist der Querschnitt des Massivblocks im Bereich des ersten Aufnahmekanals schmaler ausgebildet als im Bereich des/der weiteren Aufnahmekanäle, d.h. der Massivblock kann im Bereich der Heizelemente verbreitert ausgebildet sein, so daß sich letztere größer dimensionieren lassen. Gleichzeitig werden jedoch die engen Abstände zwischen den Düsenspitzen benachbarter Heißkanaldüsen nicht vergrößert, so daß auch weiterhin kleine Nestabstände realisierbar sind.

Das Heizelement ist bevorzugt eine elektrische Heizpatrone, die mittels elektrischen Anschlüssen an einen an sich bekannten Regelkreis anschließbar ist. Das Heizelement kann aber auch ein von einem Heizmedium durchströmbares Rohrieitungssbück sein, das entweder in den Massivblock einsetzbar ist oder von diesem gebildet wird.

Das Materialrohr hat einen im wesentlichen kreisrunden Querschnitt und ist kraft-und/oder formschlüssig in den ersten Aufnahmekanal des Massivblocks einsetzbar. Der Kanal kann folglich als Bohrung ausgebildet sein, die einfach herzustellen ist.

Um die von der Heizung erzeugte Temperatur erfassen zu können, ist in dem Massivblock wenigstens ein zusätzlicher Aufnahmekanal für einen Temperaturfühler vorgesehen.

Eine weitere wichtige Ausgestaltung der Erfindung sieht vor, daß der Massivblock relativ zu dem Materialrohr festlegbar ist. Dadurch wird verhindert, daß die Heizung während des Betriebes verrutscht oder versehentlich von dem Materialrohr abgleitet. Letzteres ist hierzu bevorzugt endseitig mit einer Umfangsnut versehen, in der ein Spannelement, beispielsweise ein Federring, formschlüssig eingesetzt wird. Der Außendurchmesser des Federrings ist größer als der Außendurchmesser des Materialrohrs, so daß der Massivblock endseitig auf dem Federring aufsitzt und nicht herabgleiten kann. Alternativ kann der Federring kraft- und/oder formschlüssig mit dem Massivblock in Eingriff stehen.

Gemäß einer noch anderen Ausführungsform der Erfindung sind an einem Anschlußstück des Materialrohrs in kammartiger Anordnung mehrere Schaftstücke vorgesehen, wobei jedes Schaftstück eine Massivblock-Heizung trägt. Die einzelnen Düsen bilden eine Düsen-Batterie, die in Längsrichtung äußerst kleine Düsenabstände aufweist. Da jede einzelne Düse mit einer eigenen Heizung versehen ist, können sämtliche Düsenkanäle individuell mit der erforderlichen Heizenergie versorgt werden.

Optimale Wärmeübergänge lassen sich erzielen, wenn die Massivblöcke zumindest abschnittsweise einstückig ausgebildet sind, wobei für jedes Schaftstück ein separater Aufnahmekanal und wenigstens ein weiterer Aufnahmekanal für ein Heizelement vorgesehen ist.

Zur Steuerung der Heizelemente sind diese jeweils einem separaten Regelkreis zugeordnet. Man kann aber auch mehrere Heizelemente gruppenweise einem gemeinsamen Regelkreis zuordnen, was den Steuerungsaufwand entsprechend reduziert.

Bei einer Mehrfach-Düsenanordnung sind die Einzeldüsen mit seitlichem Flächenschluß dicht nebeneinander angeordnet, wodurch auch hier die Nestabstände extrem gering ausfallen.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine seitliche Schnittansicht einer Heißkanaldüse,
- Fig. 2: eine Druntersicht der Heißkanaldüse von Fig. 1,
- Fig. 3: eine seitliche Schnittansicht einer anderen Ausführungsform einer Heißkanaldüse,
- Fig. 4: eine Druntersicht der Heißkanaldüse von Fig. 3,
- Fig. 5: eine seitliche Schnittansicht einer noch anderen Ausführungsform einer Heißkanaldüse,
- Fig. 6: eine Druntersicht der Heißkanaldüse von Fig. 5,
- Fig. 7: eine Mehrfach-Düsenanordnung in einer Ansicht von unten und
- Fig.8: eine Draufsicht auf eine weitere Ausführungsform einer Mehrfach-Düsenanordnung.

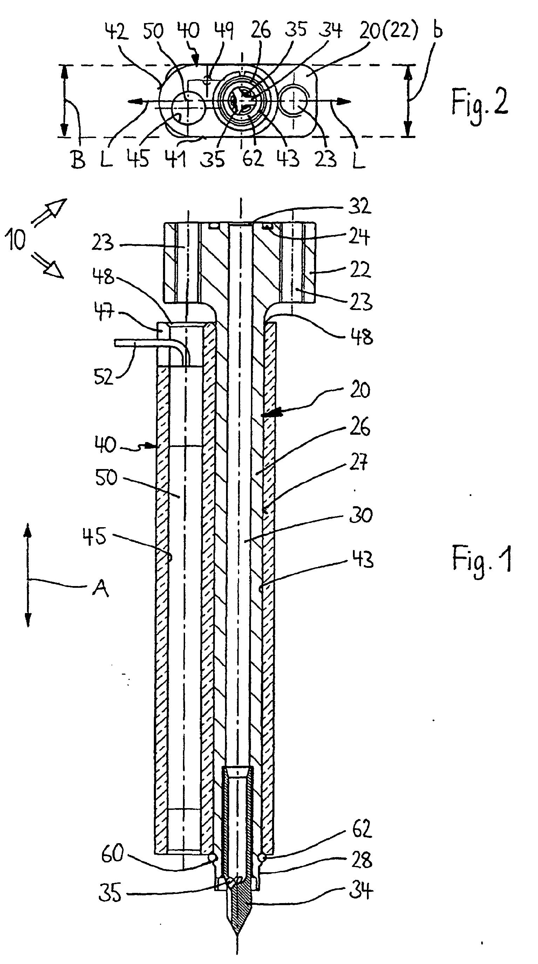

Die in Fig. 1 allgemein mit 10 bezeichnete Heißkanaldüse hat ein aus einem hochfesten Werkstoff - beispielsweise einem Werkzeugstahl - gefertigtes, im Querschnitt rundes Materialrohr 20 mit einem seitlich abgeflachten Anschlußkopf 22 und einem daran axial nach unten anschließenden schmaleren Schaft 26 mit kreisrundem Querschnitt. Die Breite b des Anschlußkopfs 22 quer zur Längsrichtung L ist nur geringfügig größer als der Durchmesser des Schafts 26, so daß das Materialrohr 20 insgesamt relativ schmal ausgebildet ist. In dem Anschlußkopf 22 sind seitlich zwei Gewindebohrungen 23 eingebracht, die zur Festlegung der Heißkanaldüse 10 an einem (nicht dargestellten) Heißkanalwerkzeug oder -verteiler geeignete (nicht gezeigte) Befestigungsschrauben aufnehmen.

Innerhalb des sich in Axialrichtung A erstreckenden Materialrohrs 20 ist mittig ein Strömungskanal 30 für eine Materialschmelze eingebracht. Der bevorzugt als Bohrung ausgebildete Kanal 30 besitzt im Anschlußkopf 22 eine Material-Zuführöffnung 32 und mündet an seinem unteren Ende in einer Düsenspitze 34, welche die Materialschmelze über wenigstens eine Material-Austrittsöffnung 35 bis in ein (nicht dargestelltes) Formnest leitet. Die bevorzugt aus einem hochwämneleitenden Material gefertigte Düsenspitze 34 ist endseitig in das Materialrohr 20 eingesetzt, vorzugsweise eingeschraubt. Sie kann aber auch - je nach Anwendungsfall - bei gleicher Funktionsweise mit dem Materialrohr 20 einstückig sein.

Zur Abdichtung der Heißkanaldüse 10 gegenüber dem Werkzeug bzw. dem Verteiler ist in dem Anschlußkopf 22 des Materialrohrs 20 konzentrisch zur Material-Zuführöffnung 32 ein Dichtring 24 vorgesehen. Denkbar ist auch die Ausbildung eines zusätzlichen (nicht gezeichneten) ringförmigen Zentrieransatzes, was die Montage der Düse 10 am Werkzeug erleichtern kann.

Auf dem Außenumfang 27 des Materialrohr-Schafts 26 ist ein Heizkörper 40 aufgesetzt. Dieser hat die Form eines flachen Massivblocks, der sich über nahezu die gesamte axiale Länge des Schafts 26 erstreckt und dessen Breite B quer zur Längsrichtung L die Breite b des Anschlußkopfs 22 des Materialrohrs 20 nicht übersteigt, wodurch die Heißkanaldüse 10 insgesamt sehr schmal ausgebildet ist. Man erkennt in Fig. 2, daß die Längsseiten bzw. -flächen 41 des im Querschnitt länglichen Massivblocks 40 eben ausgebildet sind, während die Schmalseiten 42 entsprechend der Kontur des Materialrohrs 20 gerundet sein können. Man kann den gesamten Massivblock 40 aber auch zunächst kreisrund ausbilden und ihn anschließend seitlich soweit abflachen, daß die Breite B der Breite b des Anschlußkopfs 22 entspricht.

Innerhalb des sich in Axialrichtung A erstreckenden, aus einem hochwärmeleitenden Material, beispielsweise Kupfer oder Messing, gefertigten Massivblocks 40 ist für die Aufnahme des Materialrohrs 20 ein erster Aufnahmekanal 43 in Form einer Durchgangsbohrung eingebracht. Dessen Innendurchmesser ist geringfügig kleiner als der Außendurchmesser des Schafts 26, so daß letzterer für einen guten Wärmeübergang stets satt und formschlüssig von der Heizung 40 umschlossen wird.

Parallel neben dem ersten Kanal 43 ist in der blockförmigen Heizung 40 ein weiterer Aufnahmekanal 45 vorgesehen, der für die Aufnahme eines linearen Heizelements 50 rund oder eckig ausgebildet sein kann. Im Ausführungsbeispiel von Fig. 1 ist das Heizelement 50 eine kreiszylindrische Heizpatrone, die sich fast über die gesamte axiale Länge des Heizkörpers 40 und damit bis in den Bereich der Düsenspitze 34 hinein erstreckt Sie ist mit elektrischen Anschlüssen 52 versehen, welche über eine Öffnung 47 seitlich aus dem Heizkörper 40 herausgeführt und an einen (nicht dargestellten) Regelkreis anschließbar sind. Der Außendurchmesser der Heizpatrone 50 ist geringfügig größer als der Innendurchmesser der bevorzugt oben und unten offenen Aufnahmebohrung 45, so daß die Heizpatrone 50 stets mit gutem Wärmekontakt von dem hochwärmeleitenden Material des Massivblocks 40 umschlossen ist. Die von der Heizpatrone 50 erzeugte Heizleistung wird stets optimal an den Massivblock 40 und von diesem unmittelbar an das Materialrohr 20 abgegeben.

Alternativ kann das Heizelement 50 ein von einem Heizmedium, z.B. Wasser oder Öl, durchströmbares (nicht gezeigtes) Rohrleitungsstück sein. Letzteres wird in den Aufnahmekanal 45 eingesetzt und endseitig mit (ebenfalls nicht dargestellten) seitlichen Leitungsanschlüssen verbunden. Der Aufnahmekanal 45 kann allerdings auch unmittelbar als Rohrteitungsstück dienen, indem man ihn oben und unten dicht verschließt und in den Endbereichen seitliche Leitungsanschlüsse herausführt

Für die Erfassung der von der Heizung 40 erzeugten Temperatur ist in unmittelbarer Nähe des Materialrohrs 20 in dem Massivblock 40 ein zusätzlicher Aufnahmekanal 49 vorgesehen, in dem ein (nicht dargestellter) Temperaturfühler einführbar ist. Auch dessen (nicht gezeigte) Anschlüsse werden in Längsrichtung L seitlich von dem Heizkörper 40 weggeführt.

Damit sich die Heizung 40 relativ zu dem Materialrohr 20 nicht verschiebt oder gar von diesem herabgleitet, ist letzteres endseitig mit einer Umfangsnut 60 versehen, in der ein Spannelement 62, beispielsweise ein umfangsseitig geschlitzter Federring, formschlüssig einsetzbar ist. Wie Fig. 1 zeigt, ist der Außendurchmesser des Federrings 62 größer als der Außendurchmesser des Materialrohrs 20, so daß der Massivblock 40 endseitig auf dem Federring 62 aufsitzt. Unterhalb des Federrings 62 kann das Materialrohr 20 endseitig einspringend ausgebildet sein, so daß eine umlaufende Außendurchmesser-Stufe 28 entsteht. Diese dient beispielsweise der Zentrierung der Heißkanaldüse 10 im Werkzeug.

Herstellung und Montage der Heißkanaldüse 10 gestalten sich äußerst einfach und wirtschaftlich. Zunächst wird der massive Heizungskörper 40 gefräst und mit den erforderlichen Bohrungen 43, 45 versehen. Anschließend wird die Heizpatrone 50 kraft- und formschlüssig in die vorgesehene Aufnahmebohrung 45 eingepreßt, wobei die Anschlüsse 52 aus den seitlichen Öffnungen 47 herausgeführt werden. Die auf diese Weise äußerst rationell und kostengünstig vorfertigbare Heizung 40 wird nun von unten auf das Materialrohr 20 aufgesteckt, wobei der Schaft 26 aufgrund der definierten Passung kraft- und formschlüssig in dem Aufnahmekanal 43 Halt findet. Zur weiteren Absicherung der Heizung 40 wird der Federring 62 von unten auf das Materialrohr 20 aufgesetzt und in der Umfangsnut 60 verrastet. Um die Montage der Heißkanaldüse 10 weiter zu erleichtern, können die Aufnahmebohrungen 43, 45 in dem Massivblock 40 an ihren Einführöffnungen 48 leicht angefast sein.

Fällt eine Heizpatrone 50 aus, kann diese rasch und bequem ausgetauscht werden. Hierzu wird nach Entfemen des Federrings 62 zunächst der Massivkörper 40 von dem Materialrohr 20 abgezogen. Anschließend tauscht man die defekte Heizpatrone 50 durch eine Neue aus und setzt den Heizkörper 40 wieder auf das Materialrohr 20 auf. Der gesamte Reparaturvorgang nimmt nur wenig Zeit in Anspruch. Da lediglich die defekte Heizpatrone 50 ausgewechselt werden muß, sind die Ersatzteilkosten minimal.

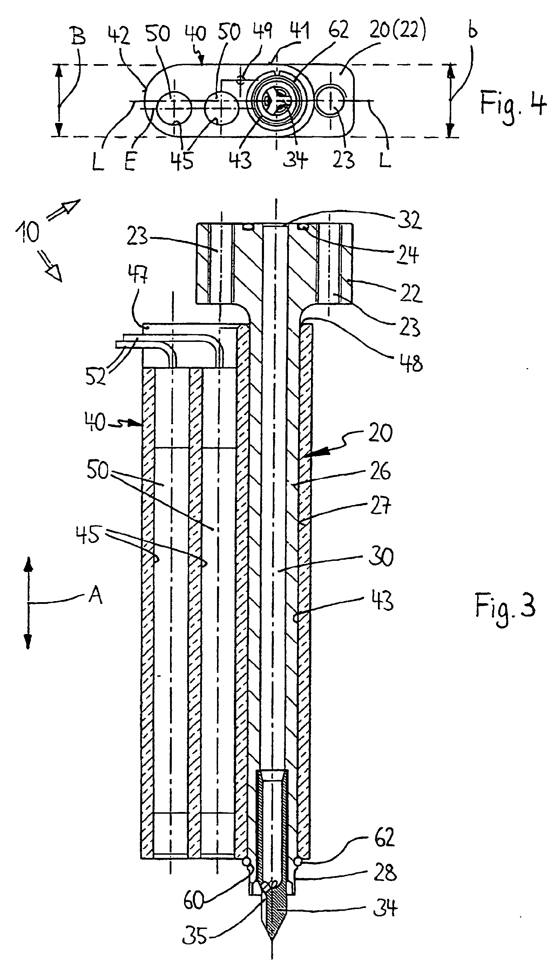

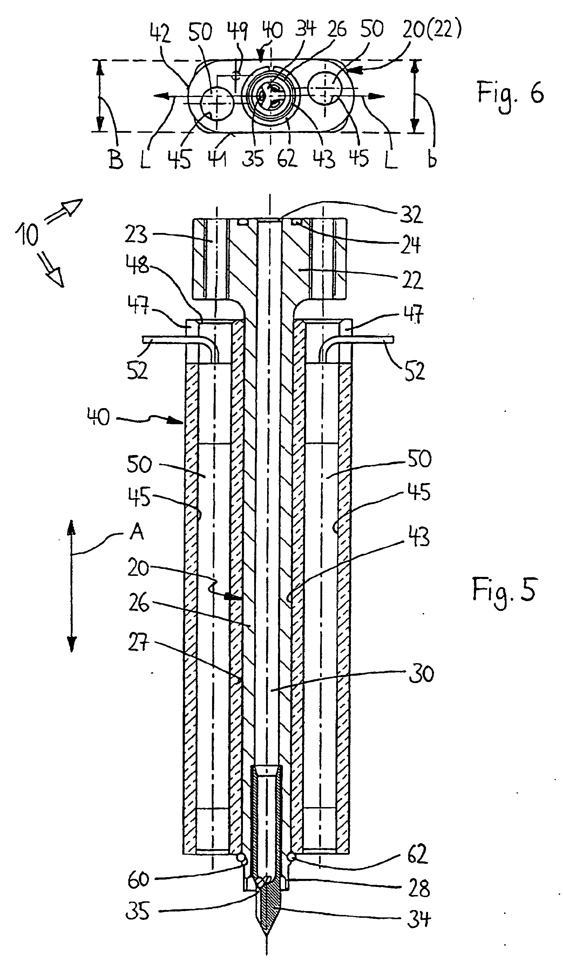

In der Ausführungsform von Fig. 3 sind einseitig neben dem ersten Aufnahmekanal 43 für das Materialrohr 20 zwei weitere Aufnahmekanäle 45 für je eine Heizpatrone 50 vorgesehen. Hierdurch läßt sich bei gleichbleibender Gesamt-Heizleistung die Leistungsdichte der einzelnen Heizpatronen 50 verringem, was sich günstig auf deren Lebensdauer auswirkt. Gleiches gilt für die Ausführung einer Heißkanaldüse 10 gemäß Fig. 5. Hier sind auf beiden Seiten des ersten Aufnahmekanals 43 zwei weitere Aufnahmekanäle 45 für Heizpatronen 50 angeordnet, so daß das Materialrohr 20 im wesentlichen symmetrisch zwischen den Heizpatronen 50 der Heizung 40 liegt.

Die Aufnahmekanäle 43, 45 der Heizung 40 können in Längsrichtung L gruppenweise fluchtend in einer Ebene E liegen (siehe Fig. 4) und/oder - wie 6 zeigt - senkrecht zur Längsrichtung L radial versetzt zueinander angeordnet sein, um beispielsweise ausreichend Platz für den zusätzlichen Aufnahmekanal 49 des Thermofühlers zu schaffen.

Aufgrund der extrem flachen Ausbildung der Heißkanaldüse 10 quer zur Längsrichtung L lassen sich die Düsen 10 dicht an dicht im Flächenschluß nebeneinander anordnen. Die Abstände der Düsenspitzen 34 sind dabei auf ein Minimum reduziert, so daß sich innerhalb der Düsenreihe extrem kleine Angußpunktabstände von nur noch wenigen Millimetern realisieren lassen. Der separat von dem Materialrohr 20 aus einem hochwärmeleitenden Werkstoff gefertigte Flachheizkörper 40 versorgt den Strömungskanal 30 rundherum und bis in die Düsenspitze 35 hinein äußerst gleichmäßig mit ausreichender Wärme. Die in dem Materialrohr 20 geführte Kunststoffmasse wird optimal erwärmt.

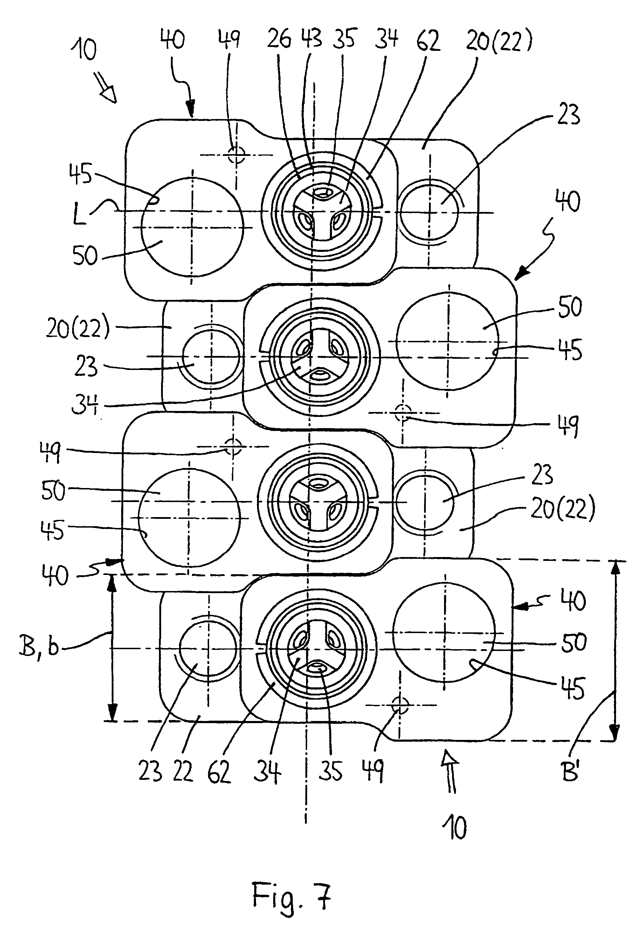

Eine bedeutsame Weiterbildung der Erfindung geht aus Fig. 7 hervor. Danach ist der Querschnitt des Massivblocks 40 im Bereich des ersten Aufnahmekanals 43 schmaler ausgebildet ist als im Bereich der weiteren Aufnahmekanäle 45, d.h. der Heizkörper 40 hat im Bereich des Materialrohrs 20 bzw. des Schafts 26 weiterhin eine die Breite b des Anschlußkopfs 22 nicht überschreitende Breite B. Der Massivblock 40 ist aber im Bereich der Heizpatronen 50 mit einer Breite B' verbreitert ausgebildet. Hierdurch können die Heizpatronen 50 in ihren Abmessungen deutlich größer ausgebildet werden, wodurch sie bei gleichen Temperaturen weniger stark belastet werden. Dies wirkt sich äußerst günstig auf deren Lebensdauer aus.

Aufgrund dieser besonderen Querschnittsgestaltung der Massivblöcke 40 können mehrere Heißkanaldüsen 10 - wie in Fig. 7 gezeigt - mit jeweils versetzt gegenüberliegenden Heizpatronen 50 angeordnet werden. Die Abstände zwischen den Materialrohren 20 bzw. der Düsenspitzen 35 wird dadurch nicht vergrößert, d.h. auch mit größeren Heizpatronen 50 lassen sich extrem kleine Nestabstände realisieren. Die mit ihren Längsflächen 41 im Bereich der Aufnahmekanäle 43 flach aneinander liegenden Ftachheizkörper 40 gewährleisten eine stets gute und gleichmäßige Wärmeverteilung in den bevorzugt fluchtend in einer Linie liegenden Materialrohren 20. Der Übergang von der Breite B auf die Breite B' kann wie gezeigt fließend erfolgen oder aber mittels einer in der Seitenfläche 41 eingearbeiteten (nicht gezeichneten) Stufe. Wichtig ist, daß die Seitenflächen 41 formschlüssig aneinanderfügbar sind, um die Düsen 10 möglichst dicht anordnen zu können.

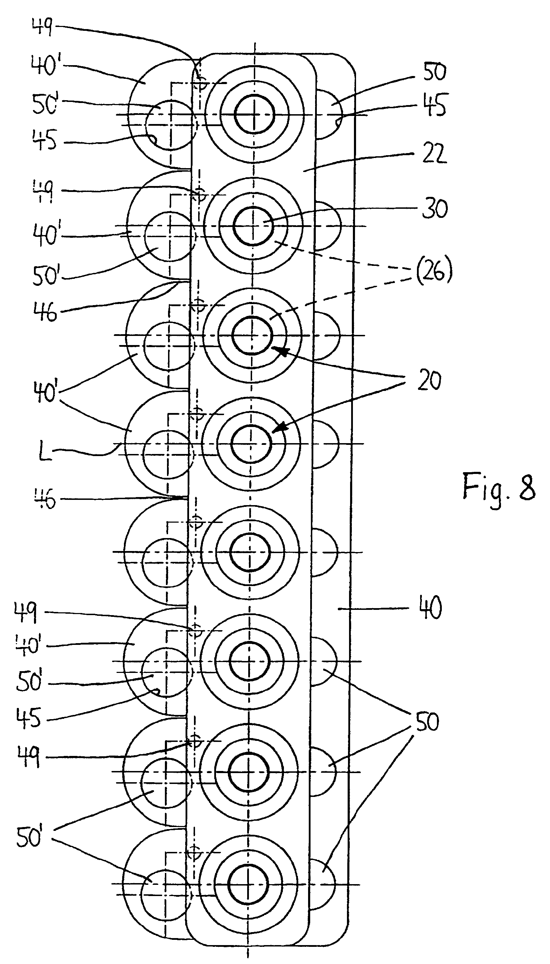

Fig. 8 zeigt eine weitere Ausführungsform der Erfindung. An einem sockelförmigen Anschlußstück 22 sind in kammartiger Anordnung mehrere Schaftstücke 26 vorgesehen, wobei jedes Schaftstück 26 eine eigene Massivblock-Heizung 40 mit einem oder mehreren Heizpatronen 50 tragen kann.

In der Ausführungsform von Fig. 8 sind die Massivblöcke 40 auf der rechten Seite einstückig ausgebildet, wobei für jedes Schaftstück 26 der Materialrohre 20 ein (hier nicht sichtbarer) separater Aufnahmekanal 43 vorgesehen ist. Zu beiden Seiten der Materialrohre 20 sind Aufnahmekanäle 45 für Heizelemente 50, 50' vorgesehen, so daß die in den Strömungskanälen 30 geführte Materialschmelze gleichmäßig beheizt wird.

Die Besonderheit der Heizung 40 von Fig. 8 besteht darin, daß die in der Zeichnung rechts von den Materialrohren 20 angeordneten Heizelemente 50 in dem durchgehend ausgebildeten Teil des Massivblocks 40 liegen und einem gemeinsamen (nicht dargestellten) Heiz-Regelkreis zugeordnet sind. Dieser versorgt die Heizelemente 50 und damit die Materialrohre 20 mit einer Grundlast. Die in der Zeichnung links von den Materialrohren 20 angeordneten Heizpatronen 50' sitzen in separat ausgebildeten Abschnitten 40' des Massivblocks 40. Sie sind jeweils an einen eigenen Regelkreis angeschlossen. Jeder Abschnitt 40' ist durch einen schmalen Luftspalt 46 von dem jeweils benachbarten thermisch getrennt und mit einer eigenen Aufnahmebohrung 49 für einen Temperaturfühler versehen. Dadurch lassen sich innerhalb der einzelnen Strömungskanäle 30 bei Bedarf individuell unterschiedliche Temperaturen erzeugen.

Die Erfindung ist nicht auf eine der vorbeschriebenen Ausführungsformen beschränkt, sondern in vielfältiger Weise abwandelbar. So kann man beispielsweise Heizpatronen 50 mit eckigem Querschnitt einsetzen, die in entsprechende Aufnahmekanäle 45 kraft-und formschlüssig eingesetzt werden. Letztere können endseitig offen oder mittels (nicht dargestellter) Deckel verschließbar sein, um beispielsweise die elektrischen Heizpatronen 50 vor äußeren Einflüssen zu schützen. Die Festlegung der Heizblöcke 40 auf den Materialrohren 20 kann femer mittels anderer Rast- oder Klemmelemente 62 erfolgen, die kraft- und/oder formschlüssig mit dem Massivblock 40 in Eingriff stehen können.

Man erkennt, daß eine Heißkanaldüse 10 für ein Spritzgießwerkzeug ein an einem Werkzeug oder Verteiler montierbares, aus einem hochfesten Werkstoff bestehendes Materialrohr 20 hat, in dem wenigstens ein Strömungskanal 30 für eine Materialschmelze ausgebildet ist und das am unteren Ende eine Düsenspitze 34 aufweist. Umfangsseitig ist auf das im Querschnitt kreisrunde Materialrohr 20 eine separate Heizung 40 in Form eines hochwärmeleitfähigen Massivblocks aufgesetzt. In diesem ist ein- oder beidseitig zu einem ersten Aufnahmekanal 43 für das Materialrohr 20 wenigstens ein weiterer Aufnahmekanal 45 für ein lineares Heizelement 50 vorgesehen. Der relativ zu dem Materialrohr 20 fixierbare Massivblock 40 ist ein Flachheizkörper, dessen Breite B zumindest im Bereich des ersten Aufnahmekanals 43 die Gesamtbreite b des Materialrohrs 20 nicht übersteigt. Das Heizelement 50 ist bevorzugt eine Heizpatrone mit elektrischen Anschlüssen 52, die seitlich aus dem Massivblock 40 herausgeführt sind. Ein zusätzlicher Aufnahmekanal 49 ist für einen Temperaturfühler vorgesehen.

### Bezugszeichenliste

- A: Axialrichtung
- B, B': Breite des Massivblocks
- b: Breite des Anschlußkopfs
- E: Ebene
- L: Längsächtung

- 10: Heißkanaldüse
- 20: Materialrohr
- 22: Anschlußkopf
- 23: Gewindebohrung
- 24: Dichtung
- 26: Schaftstück
- 27: Außenumfang
- 28: Außendurchmesser-Stufe
- 30: Strömungskanal
- 32: Material-Zuführöffnung
- 34: Düsenspitze
- 35: Material-Austrittsöffnung

- 40, 40': Heizung / Massivblock
- 41: Längsseite / -fiäche
- 42: Schmalseite
- 43: erster Aufnahmekanal
- 45: weiterer Aufnahmekanal
- 46: Luftspalt
- 47: Öffnung
- 48: Einführöffnung
- 49: zusätzlicher Aufnahmekanal
- 50, 50': Heizelement
- 52: elektrischer Anschluß
- 60: Umfangsnut
- 62: Federring

## Patentansprüche

1. Heißkanaldüse (10) für ein Spritzgießwerkzeug mit einem an einem Werkzeug oder Verteiler montierbaren Materialrohr (20), in dem wenigstens ein Strömungskanal (30) für eine Materialschmelze ausgebildet ist und das am unteren Ende eine Düsenspitze (34) aufweist, und mit einer Heizung (40) für die Materialschmelze, die wenigstens ein parallel zu dem Materialrohr (20) angeordnetes lineares Heizelement (50) aufweist, **dadurch gekennzeichnet, daß** die Heizung (40) als Massivblock aus einem hochwärmeleitfähigen Material ausgebildet und umfangsseitig auf das aus einem hochfesten Werkstoff bestehende Materialrohr (20) aufsetzbar ist, wobei der Massivblock (40) einen ersten Aufnahmekanal (43) für das Materialrohr (20) und wenigstens einen weiteren, im wesentlichen parallel zu dem ersten Aufnahmekanal (43) verlaufenden, Aufnahmekanal (45) für das lineare Heizelement (50) aufweist.

2. Heißkanaldüse nach Anspruch 1, **dadurch gekennzeichnet, daß** neben dem ersten Aufnahmekanal (43) ein- oder beidseitig wenigstens zwei weitere Aufnahmekanäle (45) zur Aufnahme von Heizelementen (50) vorgesehen sind.

3. Heißkanaldüse nach Anspruch 1 oder 2, **dadurch gekennzeichnet, daß** die Aufnahmekanäle (43, 45) fluchtend in einer Ebene (E) liegen.

4. Heißkanaldüse nach einem der Ansprüche 1 bis 3, **dadurch gekennzeichnet, daß** die Aufnahmekanäle (43, 45) radial und/oder in Bezug auf eine Längsrichtung (L) versetzt zueinander liegen.

5. Heißkanaldüse nach einem der Ansprüche 1 bis 4, **dadurch gekennzeichnet, daß** der Massivblock (40) einen im wesentlichen kreisrunden Querschnitt aufweist, der seitlich abgeflacht ist.

6. Heißkanaldüse nach einem der Ansprüche 1 bis 4, **dadurch gekennzeichnet, daß** der Massivblock (40) einen länglichen, elliptischen und/oder rechteckigen Querschnitt aufweist.

7. Heißkanaldüse nach einem der Ansprüche 1 bis 6, **dadurch gekennzeichnet, daß** der Querschnitt des Massivblocks (40) im Bereich des ersten Aufnahmekanals (43) schmaler ausgebildet ist als im Bereich des/der weiteren Aufnahmekanäle (45).

8. Heißkanaldüse nach einem der Ansprüche 1 bis 7, **dadurch gekennzeichnet, daß** der Massivblock (40) ein Flachheizkörper ist.

9. Heißkanaldüse nach einem der Ansprüche 1 bis 8, **dadurch gekennzeichnet, daß** der Massivblock (40) aus Kupfer oder einer Kupferlegierung, beispielsweise Messing, gefertigt ist.

10. Heißkanaldüse nach einem der Ansprüche 1 bis 9, **dadurch gekennzeichnet, daß** das Heizelement (50) eine Heizpatrone mit elektrischen Anschlüssen (52) ist.

11. Heißkanatdüse nach einem der Ansprüche 1 bis 9, **dadurch gekennzeichnet, daß** das Heizelement (50) ein von einem Heizmedium durchströmbares Rohrteitungsstück ist.

12. Heißkanaldüse nach einem der Ansprüche 1 bis 11, **dadurch gekennzeichnet, daß** das Materialrohr (20) einen im wesentlichen kreisrunden Querschnitt aufweist und kraft- und/oder formschlüssig in den ersten Aufnahmekanal (43) des Massivblocks (40) einsetzbar ist.

13. Heißkanaldüse nach Anspruch 13, **dadurch gekennzeichnet, daß** der Anschlußkopf (22) seitlich abgeflacht oder genähert rechteckig ausgebildet und mit Gewindebohrungen (23) versehen ist.

14. Heißkanaldüse nach einem der Ansprüche 1 bis 13, **dadurch gekennzeichnet, daß** die Breite (B) des Massivbtocks (40) zumindest im Bereich des ersten Aufnahmekanals (43) die Breite (b) des Anschlußkopfs (22) des Materialrohrs (20) nicht übersteigt.

15. Heißkanaldüse nach einem der Ansprüche 1 bis 14, **dadurch gekennzeichnet, daß** in dem Massivblock (40) wenigstens ein zusätzlicher Aufnahmekanal (49) für einen Temperaturfühler vorgesehen ist.

16. Heißkanaldüse nach einem der Ansprüche 1 bis 15, **dadurch gekennzeichnet, daß** der Massivblock (40) relativ zu dem Materiatrohr (20) festiegbar ist.

17. Heißkanaldüse nach Anspruch 16, **dadurch gekennzeichnet, daß** das Materialrohr (20) endseitig mit einer Umfangsnut (60) versehen ist, in der ein Spannelement (62), beispielsweise ein Federring, formschlüssig einsetzbar ist, wobei der Außendurchmesser des Federrings (62) größer ist als der Außendurchmesser des Materialrohrs (20).

18. Heißkanaldüse nach Anspruch 16 oder 17, **dadurch gekennzeichnet, daß** der Massivblock (40) endseitig auf dem Federring (62) aufsitzt.

19. Heißkanaldüse nach Anspruch 16 oder 17, **dadurch gekennzeichnet, daß** der Federring (62) kraft- und/oder formschlüssig mit dem Massivblock (40) in Eingriff steht.

20. Heißkanaldüse nach einem der Ansprüche 1 bis 19, **dadurch gekennzeichnet, daß** an einem Anschlußstück (22) in kammartiger Anordnung mehrere Schaftstücke (26) vorgesehen sind und daß jedes Schaftstück (26) eine Massivblock-Heizung (40) trägt.

21. Heißkanaldüse nach Anspruch 20, **dadurch gekennzeichnet, daß** die Massivblöcke (40) zumindest abschnittsweise einstückig ausgebildet sind, wobei für jedes Schaftstück (26) ein separater Aufnahmekanal (43) und wenigstens ein weiterer Aufnahmekanal (45) für ein Heizelement (50) vorgesehen ist.

22. Heißkanaldüse nach einem der Ansprüche 1 bis 21, **dadurch gekennzeichnet, daß** jedes Heizelement (50) einem separaten Regelkreis zugeordnet ist.

23. Heißkanaldüse nach einem der Ansprüche 1 bis 22, **dadurch gekennzeichnet, daß** mehrere Heizelemente (50) gruppenweise einem gemeinsamen Regelkreis zugeordnet sind.

24. Mehrfach-Düsenanordnung mit wenigstens zwei Heißkanaldüsen nach einem der Ansprüche 1 bis 23, **dadurch gekennzeichnet, daß** die Einzeldüsen (10) mit seitlichem Flächenschluß dicht nebeneinander angeordnet sind.

25. Mehrfach-Düsenanordnung nach Anspruch 24, **dadurch gekennzeichnet, daß** die Materialrohre (20) bzw. die Aufnahmekanäle (43) fluchtend in einer Reihe liegen.

## Claims

1. Hot runner nozzle (10) for an injection mould, including a material pipe (20) adapted to be mounted on a mould or a manifold and provided inside with at least one flow duct (30) for a melt and, at its lower end, with a nozzle tip (34), and including a heater (40) for the melt which comprises at least one linear heating element (50) arranged substantially parallel to the material pipe (20), wherein the heater (40) is designed as a solid block made of a highly heat-conductive material and is adapted to be attached onto the periphery of the material pipe (20) made of a high-strength material, said solid block (40) comprising a first receiving channel (43) for the material pipe (20) and at least one further receiving channel (45) for the linear heating element (50), which further channel is substantially parallel to the first receiving channel (43).

2. Hot runner nozzle according to claim 1, **wherein** at least two other receiving channels (45) for heating elements (50) are additionally provided on one side or on both sides of the first receiving channel (43).

3. Hot runner nozzle according to claim 1 or claim 2, **wherein** the receiving channels (43, 45) are aligned in one plane (E).

4. Hot runner nozzle according to any one of claims 1 to 3, **wherein** the receiving channels (43, 45) are arranged staggered radially and/or in relation to a longitudinal direction (L).

5. Hot runner nozzle according to any one of claims 1 to 4, **wherein** the solid block (40) has an essentially circular cross-section which is laterally flattened.

6. Hot runner nozzle according to any one of claims 1 to 4, **wherein** the solid block (40) has an oblong, elliptical and/or angular cross-section.

7. Hot runner nozzle according to any one of claims 1 to 6, **wherein** the cross-section of the solid block (40) is narrower in the zone of the first receiving channel (43) than in the zone of the other receiving channel(s) (45).

8. Hot runner nozzle according to any one of claims 1 to 7, **wherein** the solid block (40) is a flat heater.

9. Hot runner nozzle according to any one of claims 1 to 8, **wherein** the solid block (40) is made of copper or of a copper alloy, e.g. brass.

10. Hot runner nozzle according to any one of claims 1 to 9, **wherein** the heating element (50) is a heating cartridge having electric connections (52).

11. Hot runner nozzle according to any one of claims 1 to 9, **wherein** the heating element (50) is a pipe segment through which a heating medium passes.

12. Hot runner nozzle according to any one of claims 1 to 11, **wherein** the material pipe (20) has an essentially circular cross-section for non-positive or positive insertion into the first receiving channel (43) of the solid block (40).

13. Hot runner nozzle according to claim 12, **wherein** the connecting head (22) is laterally flattened or approximately angular and is provided with tapped holes (23).

14. Hot runner nozzle according to any one of claims 1 to 13, **wherein** the width (B) of the solid block (40) does not exceed the width (b) of the connecting head (22) of the material pipe (20) at least in the zone of the first receiving channel (43).

15. Hot runner nozzle according to any one of claims 1 to 14, **wherein** at least one additional receiving channel (49) for a temperature sensor is provided in the solid block (40).

16. Hot runner nozzle according to any one of claims 1 to 15, **wherein** the solid block (40) is fixed in relation to the material pipe (20).

17. Hot runner nozzle according to claim 16, **wherein** the material pipe (20) is provided at its end with a peripheral groove (60) into which a clamping element (62), e.g. a spring washer, is positively inserted, the outer diameter of the spring washer (62) being greater than the outer diameter of the material pipe (20).

18. Hot runner nozzle according to claim 16 or claim 17, **wherein** the end of the solid block (40) rests on the spring washer (62).

19. Hot runner nozzle according to claim 16 or claim 17, **wherein** the spring washer (62) engages non-positively or positively into the solid block (40).

20. Hot runner nozzle according to any one of claims 1 to 19, **wherein** several shaft pieces (26) in comb-like arrangement are provided on a connecting piece (22) and wherein each shaft piece (26) has a solid-block heating (40).

21. Hot runner nozzle according to claim 20, **wherein** the solid blocks (40) are designed in one piece at least in sections, a separate receiving channel (43) being provided for each shaft piece (26) and at least one other receiving channel (45) being provided for a heating element (50).

22. Hot runner nozzle according to any one of claims 1 to 21, **wherein** each heating element (50) is assigned to a separate control circuit.

23. Hot runner nozzle according to any one of claims 1 to 22, **wherein** several heating elements (50) in groups are associated to a common control circuit.

24. Multiple-nozzle arrangement comprising at least two hot runner nozzles according to any one of claims 1 to 23, **wherein** the individual nozzles (10) are arranged in close packing side by side with the lateral surfaces contacting each other.

25. Multiple-nozzle arrangement according to claim 24, **wherein** the material pipe (20) and the receiving channels (43), respectively, are aligned in one row.

## Revendications

1. Buse à canal chaud (10) pour un moule pour injection avec un tube de matière (20) susceptible d'être installé sur un moule ou un distributeur, ladite buse à canal chaud (10) présentant à son intérieur au moins un canal d'écoulement (30) pour une matière fondue et comportant sur son bout inférieur une pointe de buse (34), et avec un radiateur (40) pour la matière fondue, ledit radiateur (40) comportant au moins un élément de chauffage linéaire (50) arrangé parallèle par rapport au tube de matière (20), **caractérisée en que** le radiateur (40) est conçu comme bloc massif en une matière de haute conductibilité thermique et qu'il est susceptible d'être positionné circonférentiellement sur le tube de matière (20) fabriqué en une matière à haute résistance, le bloc massif (40) comportant un premier canal de réception (43) pour le tube de matière (20) et au moins un autre canal de réception (45) pour l'élément de chauffage linéaire (50) qui s'étend pour l'essentiel de manière parallèle par rapport au premier canal de réception (43).

2. Buse à canal chaud selon la revendication 1, **caractérisée en ce qu'**au moins deux autres canaux de réception (45) sont prévus à côté du premier canal de réception (43) sur l'un ou les deux côtés du dernier qui sont destinés à recevoir des éléments de chauffage (50).

3. Buse à canal chaud selon la revendication 1 ou 2, **caractérisée en ce que** les canaux de réception (43, 45) sont arrangés en alignement dans un plan (E).

4. Buse à canal chaud selon l'une des revendications 1 à 3, **caractérisée en ce que** les canaux de réception (43, 45) sont décalés l'un par rapport à l'autre de manière radiale et/ou par rapport à une direction longitudinale (L).

5. Buse à canal chaud selon l'une des revendications 1 à 4, **caractérisée en ce que** le bloc massif (40) présente une section essentiellement circulaire qui est aplatie latéralement.

6. Buse à canal chaud selon l'une des revendications 1 à 4, **caractérisée en ce que** le bloc massif (40) présente une section oblongue, elliptique et/ou rectangulaire.

7. Buse à canal chaud selon l'une des revendications 1 à 6, **caractérisée en ce que** la section du bloc massif (40) est plus étroite dans la région du premier canal de réception (43) que dans la région de l'autre canal/des autres canaux de réception (45).

8. Buse à canal chaud selon l'une des revendications 1 à 7, **caractérisée en ce que** le bloc massif (40) est un radiateur plat.

9. Buse à canal chaud selon l'une des revendications 1 à 8, **caractérisée en ce que** le bloc massif (40) est fabriqué à partir de cuivre ou d'un alliage de cuivre, par exemple laiton.

10. Buse à canal chaud selon l'une des revendications 1 à 9, **caractérisée en ce que** l'élément de chauffage (50) est une cartouche chauffante comprenant des raccordements électriques (52).

11. Buse à canal chaud selon l'une des revendications 1 à 9, **caractérisée en ce que** l'élément de chauffage (50) est une pièce de tuyauterie permettant l'écoulement d'un médium de chauffage à travers ledit élément de chauffage (50).

12. Buse à canal chaud selon l'une des revendications 1 à 11, **caractérisée en ce que** le tube de matière (20) présente une section essentiellement circulaire et qu'il est susceptible d'être inséré par adhérence et/ou par complémentarité de forme dans le premier canal de réception (43) du bloc massif (40).

13. Buse à canal chaud selon la revendication 13, **caractérisée en ce que** la tête de connexion (22) est aplatie latéralement ou approximativement de forme rectangulaire et munie de trous taraudés (23).

14. Buse à canal chaud selon l'une des revendications 1 à 13, **caractérisée en ce que** la largeur (B) du bloc massif (40) ne dépasse pas la largeur (b) de la tête de connexion (22) du tube de matière (20), au moins dans la région du premier canal de réception (43).

15. Buse à canal chaud selon l'une des revendications 1 à 14, **caractérisée en ce qu'**au moins un canal de réception additionnel (49) pour un capteur de température est prévu dans le bloc massif (40).

16. Buse à canal chaud selon l'une des revendications 1 à 15, **caractérisée en ce que** le bloc massif (40) peut être fixé en relation avec le tube de matière (20).

17. Buse à canal chaud selon la revendication 16, **caractérisée en ce que** le tube de matière (20) est muni à son extrémité d'une rainure périphérique (60) susceptible de recevoir par complémentarité de forme un élément de serrage (62), par exemple une rondelle-ressort, le diamètre extérieur de la rondelle-ressort (62) étant supérieur au diamètre extérieur du tube de matière (20).

18. Buse à canal chaud selon la revendication 16 ou 17, **caractérisée en ce que** l'extrémité du bloc massif (40) repose sur la rondelle-ressort (62).

19. Buse à canal chaud selon la revendication 16 ou 17, **caractérisée en ce que** la rondelle-ressort (62) est en engrènement avec le bloc massif (40) par adhérence et/ou par complémentarité de forme.

20. Buse à canal chaud selon l'une des revendications 1 à 19, **caractérisée en ce que** plusieurs pièces de tige (26) sont prévues sur une pièce de connexion (22) de manière à former une configuration en peigne et que chaque pièce de tige (26) porte un radiateur (40) en bloc massif.

21. Buse à canal chaud selon la revendication 20, **caractérisée en ce qu'**au moins certaines parties des blocs massifs (40) sont formées en une seule pièce et qu'un canal de réception individuel (43) est prévu pour chaque pièce de tige (26) et au moins un autre canal de réception (45) est prévu pour un élément de chauffage (50).

22. Buse à canal chaud selon l'une des revendications 1 à 21, **caractérisée en ce que** chaque élément de chauffage (50) est assigné à un circuit de réglage individuel.

23. Buse à canal chaud selon l'une des revendications 1 à 22, **caractérisée en ce que** plusieurs éléments de chauffage (50) sont groupés et assignés à un circuit de réglage commun.

24. Agencement multi-buses comprenant au moins deux buses à canal chaud selon l'une des revendications 1 à 23, **caractérisé en ce que** les buses individuelles (10) sont arrangées tout près l'une à côté de l'autre de manière à ce que leurs faces latérales sont en contact.

25. Agencement multi-buses selon la revendication 24, **caractérisé en ce que** les tubes de matière (20) et les canaux de réception (43), respectivement, sont alignés en file.
